# EUROPÄISCHE PATENTSCHRIFT

(11) **EP 0 578 664 B1**
(45) Veröffentlichungstag und Bekanntmachung des Hinweises auf die Patenterteilung: **20.09.1995**
(21) Anmeldenummer: 92907041.5
(22) Anmeldetag: 27.03.1992
(51) Int. Cl.: G01N 23/02, H05G 1/52, H01J 35/08

(54) **EINRICHTUNG ZUR RÖNTGENBESTRAHLUNG VON OBJEKTEN**
DEVICE FOR IRRADIATING OBJECTS WITH X-RAYS
DISPOSITIF DE RADIOGRAPHIE D'OBJETS

(30) Priorität: 30.03.1991 DE 4110468
(43) Veröffentlichungstag der Anmeldung: 19.01.1994
(73) Patentinhaber: FORSCHUNGSZENTRUM JÜLICH GMBH, 52425 Jülich (DE)
(72) Erfinder: HALLING, Horst, D-5176 Pier (DE); FUHRMANN, Gerd, D-5100 Aachen (DE)
(86) Internationale Anmeldenummer: DE9200247
(87) Internationale Veröffentlichungsnummer: WO9217771

(56) Entgegenhaltungen:
- EP-A- 0 032 108
- GB-A- 2 175 739
- US-A- 3 158 745

## Beschreibung

Die Erfindung bezieht sich auf eine Einrichtung zur Bestrahlung von Körperschichten mit Röntgenstrahlen. Die Einrichtung weist eine Röntgenstrahlenquelle zur Erzeugung des Röntgenstrahls, der auf ein zu untersuchendes Objekt zu dessen Durchdringung ausgerichtet ist, sowie einen Detektor auf, der in Durchstrahlungsrichtung des Röntgenstrahls gesehen hinter dem Objekt angeordnet ist und die Intensitätsverminderung des Röntgenstrahls nach Durchdringen des Objektes mißt. Als Röntgenstrahlenquelle dient in bekannter Weise ein als Anode geschaltetes metallisches Target, das im Strahlengang eines unter Hochspannung zwischen Anode und Kathode an der Kathode emittierten Elektronenstrahls angeordnet ist, der das Target im Brennfleck trifft.

Röntgenstrahlungseinrichtungen dieser Art sind bekannt (US-A-3 158 745). Sie werden verstärkt insbesondere zur Röntgen-Tomographie eingesetzt, bei der rechnergestützt von den durchstrahlten Objekten räumliche Bilder erzeugt werden. Dabei wird in üblicher Weise die Intensitätsverminderung der Röntgenstrahlung nach ihrem Durchgang durch das Objekt gemessen. Die Intensitätsverminderung ist vom durchstrahlten Material und dessen Struktur abhängig. Um räumliche Bilder zu erhalten, wird das zu untersuchende Objekt bisher durch schrittweises Drehen des Objekts um eine ortsfeste Drehachse bei verschiedenen Winkelstellungen bestrahlt. Die dabei im einzelnen erhaltenen Bilder werden zunächst elektronisch gespeichert und mittels geeigneter Rechnerprogramme ausgewertet. Durch Rückrechnen der aus den aufeinanderfolgenden Bildern erhaltenen Daten werden Informationen über die räumliche Materialverteilung und damit über die Struktur des Objekts ermittelt.

Angewendet wird die Durchstrahlung von Objekten mit Röntgenstrahlen (Röntgenoskopie) neben dem medizinischen Bereich auch zur zerstörungsfreien Werkstoffprüfung. Es werden Risse, Abscheidungen und andere Materialinhomogenitäten untersucht. Während die für die Untersuchung erforderliche Ortsauflösung im medizinischen Bereich bei mm liegt, interessieren bei der Materialprüfung Bereiche bis hin zu µm. Es ist dazu je nach zu untersuchendem Objekt das Röntgenstrahlenspektrum von Interesse, das vom verwendeten Target als Anodenmaterial bestimmt wird. Von wesentlicher Bedeutung für eine räumliche Bildauflösung ist auch die mögliche Winkelverstellung für die mit unterschiedlichem Bestrahlungswinkel nacheinander aufzunehmenden Objektbilder.

Aufgabe der Erfindung ist es, eine Einrichtung zur Röntgenoskopie zu schaffen, bei der räumliche Objektstrukturen mit hoher Präzision in einfacher Weise darstellbar sind.

Diese Aufgabe wird gemäß der Erfindung durch die in Patentanspruch 1 gekennzeichneten Merkmale gelöst. Durch Verstellen des Elektronenstrahls wird die Lage des Brennflecks auf dem Target örtlich verlagert. Diese Art der Brennfleckverlagerung erlaubt sehr geringe Veränderungen des Durchstrahlungswinkels so, daß tomopraphische Bilder mit hoher Ortsauflösung erreichbar sind. Die Veränderung des Durchstrahlungswinkels wird ohne eine Lageveränderung des Objekts oder eine Verstellung des Targets erzielt. Durch ein mechanisches Bewegen von Objekt oder Target verursachte Qualitätsminderungen und Unschärfen des tomographischen Bildes sind somit vermieden.

Es ist eine schrittweise Brennfleckverschiebung vorgesehen, wobei die Schrittweite bei dieser Verschiebung auf dem Target derart bemessen ist, daß die dadurch erzielte Röntgenstrahlverschiebung auf dem Detektor kleiner ist, als die Flächenabmessung eines einzelnen Detektorelementes. Bevorzugt entspricht die Schrittweite auf dem Target einer Verschiebung des Röntgenstrahls um eine halbe Flächenabmessung eines Detektorelements, (Patentanspruch 2). Das Bemessen der Schrittweite in der vorgenannten Weise erhöht die von den Detektorelementen her bestimmte Bildauflösung. Strukturgrenzen lassen sich wegen der vorgesehenen geringen Veränderung des Bestrahlungswinkels zwischen aufeinanderfolgenden Röntgenbildern schärfer erkennen. Die Schrittweite auf eine halbe Detektorelementenlänge zu begrenzen erlaubt beispielsweise eine sehr genaue Differenzierung bei kontinuierlichen Veränderungen der Objektstruktur, z.B. ist in Grenzzonen von Adsorbtionsschichten eine hohe Auflösung erreichbar.

Für eine insgesamte weite Brennfleckverstellung, die zur Untersuchung von Proben ohne eine Änderung der Probenposition erforderlich wird, ist es vorteilhaft, den Detektor dem Röntgenstrahl nachfahrbar anzuordnen, (Patentanspruch 3). Um den Abstand zwischen dem Brennfleck auf dem Target und der Drehachse für die aufeinanderfolgenden Röntgenbilder beeinflussen zu können, insbesondere konstant zu halten, ist gemäß Patentansprüchen 4 und 5 die Targetoberfläche entsprechend geformt, insbesondere ist das Target als hohlkegelartig geformte Schale ausgebildet.

Zur Untersuchung eines Objektes oder verschiedener Objekte mit Röntgenstrahlen, die jeweils unterschiedliche Röntgenstrahlenspektren aufweisen, besteht das Target nach Patentanspruch 6 aus unterschiedlichen Materialien, die benachbart angeordnet und alternativ zu benutzen sind. Zur Umschaltung auf die jeweils gewünschte charakteristische Röntgenstrahlung ist der Elektronenstrahl auf die verschiedenen Metalle ausrichtbar, (Patentanspruch 7).

Zur Führung des Elektronenstrahls in erfindungsgemäßer Weise eignet sich bevorzugt die Verstelleinrichtung eines Elektronenstrahls, wie sie in einem Elektronenmikroskop vorgesehen ist. Das Target wird daher zweckmäßig vom Elektronenstrahl eines Elektronenmikroskopes bestrahlt, (Patentanspruch 8), und die Einrichtung zur Untersuchung des Objektes ist so ausgebildet, daß sie im Probenraum eines Elektronenmikroskopes einsetzbar ist. Um Meßstörungen durch auf den Detektor auftreffende Primärelektronen zu vermeiden, wird der Detektor durch eine elektrisch leitfähige Folie geschützt, die auf konstantem elektrischen Potential gehalten wird und die störenden Primärelektronen ableitet, (Patentanspruch 9).

Die Erfindung wird nachfolgend anhand von Ausführungsbeispielen näher erläutert. Die Zeichnung zeigt im einzelnen:
- Figur 1: Einrichtung zur Röntgenbestrahlung von Objekten mit Detektor;
- Figur 2: Abbildung einer Objektkante;
- Figur 3: Schrittweises Abtasten einer Absorbtionsschicht;
- Figur 4: hohlkegelartig geformtes Target.

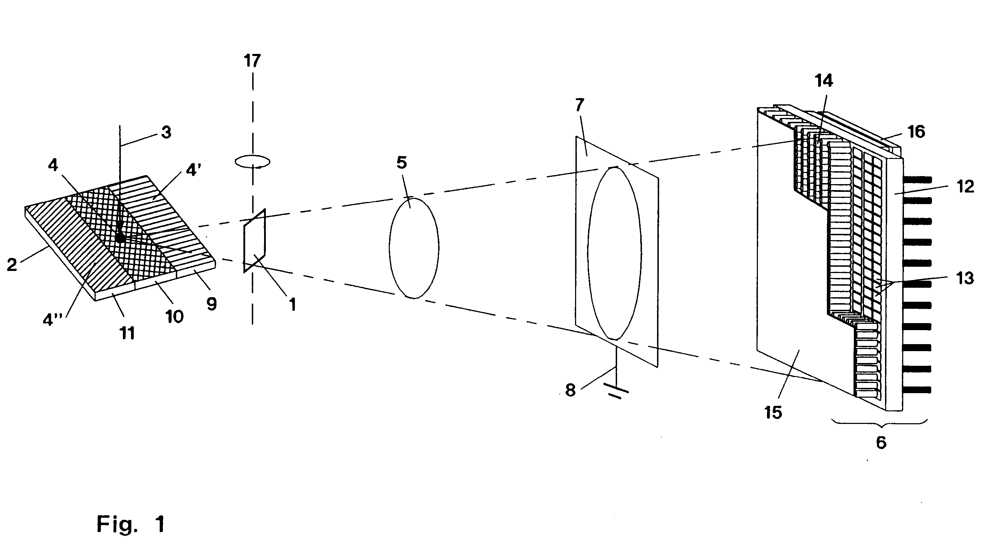

In Figur 1 ist eine Einrichtung zur Röntgenbestrahlung eines Objekts 1 schematisch dargestellt. Auf eine Targetschneide eines elektrisch als Anode geschalteten Targets 2 trifft ein Eelektronenstrahl 3 im Brennfleck 4, 4′ oder 4˝ auf. Der Elektronenstrahl 3 wird im Hochspannungsfeld zwischen Target 2 und in Figur 1 nicht dargestellten Kathode in üblicher Weise durch Emittieren von Elektronen an der Kathode erzeugt. Das Target 2 ist derart angeordnet, daß der im Brennfleck 4 erzeugte Röntgenstrahl 5 das Objekt 1 erfaßt und nach Durchstrahlen des Objekts auf einen Detektor 6 auftrifft. Der Detektor mißt die verbliebene Intensität des Röntgenstrahls 5 und stellt im Vergleich mit der Ausgangsintensität am Brennfleck 4 die Intensitätsverminderung der Röntgenstrahlung fest. Im Ausführungsbeispiel ist vor dem Detektor 6 im Strahlengang des Röntgenstrahls 5 noch eine elektrisch leitfähige Folie 7 angeordnet, die über einen entsprechenden elektrischen Anschluß 8 auf konstantem elektrischen Potential gehalten ist.

Das Target 2 besteht aus unterschiedlichen, benachbart angeordneten Metallen 9, 10 und 11. Im Ausführungsbeispiel sind nebeneinander Cu sowie Fe und W als Targetmaterial eingesetzt. Es lassen sich jedoch auch andere Metalle verwenden, die unterschiedliche Röntgenstrahlenspektren aufweisen.

Der Elektronenstrahl 3 läßt sich in der Einrichtung derart verstellen, daß sich durch Verschieben des Brennflecks von 4 nach 4′ oder 4˝ und Ausrichten des Elektronenstrahls 3 auf eines der Metalle 9, 10, 11 alternativ Röntgenstrahlen mit verschiedenem Röntgenstrahlenspektrum erzeugen lassen. Zur Untersuchung des Objekts 1 stehen somit ohne erhebliche Umstellung der Einrichtung durch einfaches Regulieren der Elektronenstrahlungsrichtung verschiedene Röntgenstrahlcharakteristiken zur Verfügung.

Im Ausführungsbeispiel wird zur Änderung der Elektronenstrahlrichtung die Verstellungsmöglichkeit des Elektronenstrahls in einem Elektronenmikroskop genutzt. Diese Einrichtung ist in Figur 1 nicht dargestellt, sie entspricht vielmehr in üblicher Weise den bei Elektronenmikroskopen verhandenen Verstelleinrichtungen. Die gesamte Einrichtung mit Target 2, Objekt 1 und Detektor 6 ist derart dimensioniert, daß die Einrichtung insgesamt in den Probenraum eines Elektronenmikroskops einsetzbar ist.

Als Detektor 6 wird im Ausführungsbeispiel ein CCD-Detektor (CCD = charge coupled device) mit CCD-Chip 12 und Detektorelementen 13, mit Glasfaseroptik 14 und Szintillationsschicht 15 benutzt. Der CCD-Chip 12 wird von Peltierelementen 16 gekühlt und auf konstanter Temperatur gehalten, im Ausführungsbeispiel üblicher Weise auf eine Temperatur T = -40 °C.

Im Ausführungsbeispiel nach Figur 1 ist das zu durchstrahlende Objekt 1 um eine Drehachse 17 drehbar gelagert. Diese Drehbewegung wird jedoch nur für Gesamtdrehungen (360°) oder eine Groborientierung des Objekts genutzt, zur Aufnahme von Objektbildern aus verschiedenen Blickwinkeln in einem engeren Winkelbereich wird die bereits beschriebene Verstellbarkeit des Elektronenstrahls 3 im Elektronenmikroskop genutzt.

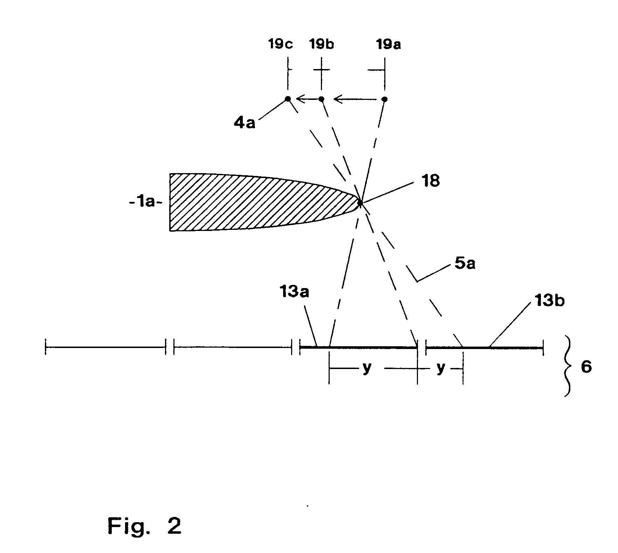

Zu letzterem, also zur Aufnahme von Objektbildern aus verschiedenen Blickwinkeln ist in Figur 2 eine schrittweise Verstellung eines Röntgenstrahls 5a und die damit erzielte erhöhte Auflösung von tomographischen Bildern schematisch wiedergegeben. In Figur 2 ist die Röntgenbestrahlung einer Kante 18 eines Objekts la unter schrittweiser Drehung des Röntgenstrahls 5a um eine Schrittweite X durch eine Brennfleckverschiebung eines Brennflecks 4a aus seiner Lage 19a über 19b nach 19c gezeigt. Der auf die Kante 18 auftreffende Röntgenstrahl 5a wandert bei dieser Verschiebung des Brennflecks auf dem Detektor 6 um die Röntgenstrahlverschiebung Y vom Detektorelement 13a zum Detektorelement 13b. Da der Röntgenstrahl 5a jedoch erst in der Lage 19c des Brennflecks auf das Detektorelement 13b auftrifft, wird vom Detektor 6 erst in dieser Stellung des Brennflecks ein der Abbildung der Kante 18 entsprechendes geändertes Signal abgegeben. Durch Bewegen des Elektronenstrahls und Verschieben des Brennflecks läßt sich somit die Lage der Kante 18 sehr genau austasten.

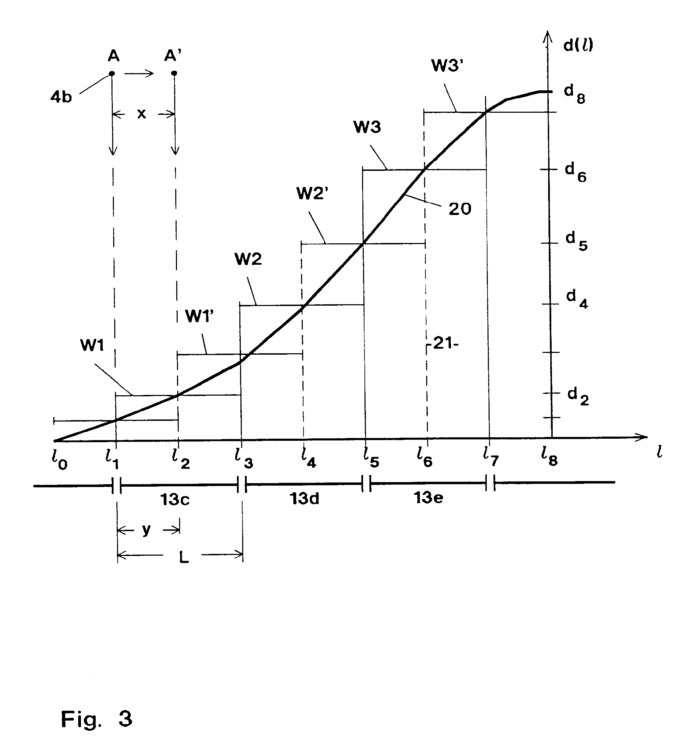

Ein weiteres Ausführungsbeispiel ist in Figur 3 wiedergegeben. Durch Verstellen des Elektronenstrahls und Verschieben eines Brennflecks 4b auf einem Target aus einer Brennfleckpositiong A nach A′ wird mit dem Röntgenstrahl der Verlauf 20 einer Absorbtionsschicht 21 abgetastet. Die Absorptionsschicht beginnt an der Stelle l₀ auf der Oberfläche eines Objekts und steigert ihre Stärke von der Dicke d₀ allmählich, bis sie an der Stelle l₈ ihre maximale Dicke d₈ erreicht. Bestrahlt man die Absorptionsschicht 21 mit einem Röntgenstrahl aus der Brennfleckposition A, so erhält man auf dem Detektor über die Detektorelemente 13c bis 13e aufgrund ihrer endlichen Abmessung L, die dem doppelten Abstand zwischen den Stellen l₁ und l₂ der Objektoberfläche, also einem Abstand L = |l₁ bis l₃| = |l₃ bis l₅| usw. entspricht, mittlere Meßwerte W₁, W₂, W₃ über die Dicke d der Absorptionsschicht 21, die dem Integralwert der Dicke jeweils von d₁ bis d₃ bzw. d₃ bis d₅ usw. zwischen den Stellen l₁ bis l₃ bzw. l₃ bis l₅ usw. analog sind. Verschiebt man den Brennfleck anschließend so, daß der Verschiebeweg X zwischen den Brennfleckpositionen A, A′ einer Verstellung Y des auf dem Detektor auftreffenden Röntgenstrahls um eine halbe Detektroelementenlänge L entspricht, so erhält man jetzt von den Detektorelementen 13c bis 13e mittlere Meßwerte W₁′, W₂′, W₃′ über die Dicke der Absorptionsschicht, die den Intergralwerten der Dicke jeweils von d₂ bis d₄ bzw. d₄ bis d₅ usw. zwischen den Stellen l₂ bis l₄ bzw. l₄ bis l₆ usw. analog sind. Bei dieser Verstellung des Brennflecks im Ausführungsbeispiel nach Figur 3 um eine Schrittweite x = L/2 (halbe Länge L eines Detektorelementes) werden somit in einfacher Weise bei Messung der Absorptionsschicht Zwischenwerte erzielt, die das Abbilden der Absorptionsschicht 21 verschärfen. Bei alternierender Verstellung des Brennflecks zwischen A und A′ werden die Konturen von Objekten somit genauer erfaßbar und die tomographischen Bilder deutlicher.

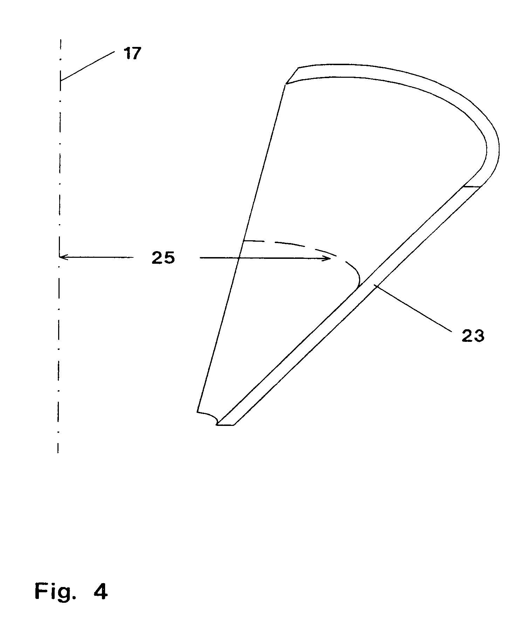

In Figur 4 ist ein Target 23 mit einer hohlkegelartig geformten Schneidenoberfläche gezeigt. Das Target ist schalenförmig ausgebildet. Die Form der Schneidenoberfläche ist derart gestaltet, daß die auf der Schneidenoberfläche erzeugbaren Brennflecklagen zur Drehachse 17 des zu durchstrahlenden Objekts einen bestimmten gewünschten Abstand 25 aufweisen, insbesondere stets einen gleich großen Abstand, wie dies bei der hohlkegelartigen Form nach Figur 4 der Fall ist, wo die Brennpunkte auf einer Kreisbahn um die Drehachse geführt werden.

Wesentlicher Kern der Erfindung ist die schrittweise Verschiebbarkeit des Brennflecks auf dem Target wie im Anspruch 1 definiert. Mit dieser Verschiebung lassen sich sowohl tomographische Bilder ohne mechanisches Bewegen der abzubildenden Objekte selbst erzeugen, zugleich läßt sich aber auch die Bildschärfe steigern, es werden klarere tomographische Aufnahmen erreicht. Die Verwendung bereits vorgesehener Verstellmöglichkeiten für die Ausrichtung von Elektronenstrahlen in Elektronenmikroskopen ist ein großer Vorteil für die Realisierung der Erfindung. Auf den Einsatz der erfindungsgemäßen Einrichtung in Elektronenmikroskopen und die Beobachtung von Objekten unter Verwendung von Elektronenmikroskopen ist die Erfindung jedoch nicht beschränkt.

## Patentansprüche

1. Einrichtung zur Röntgenbestrahlung von Körperschich ten mit einer Röntgenstrahlenquelle zur Erzeugung eines Röntgenstrahls, der auf ein zu untersuchendes Objekt zu dessen Durchdringung ausgerichtet ist, und mit einem die Intensitätsverminderung des Röntgenstrahls nach Durchdringen des Objekts messenden Detektors (6), der in Durchstrahlungsrichtung des Röntgenstrahls gesehen hinter dem Objekt angeordnet ist, wobei als Röntgenstrahlenquelle ein als Anode geschaltetes Target (2) dient, das im Strahlengang eines kathodisch emittierten Elektronenstrahls angeordnet ist, der das Target im Brennfleck trifft, **dadurch gekennzeichnet**, daß der Detektor aus Detektorelementen aufgebaut ist, und daß zur Verlagerung des Brennflecks (4) auf dem Target (2) durch Verstellen des Elektronenstrahls (3) eine schrittweise Brennfleckverschiebung vorgesehen ist, wobei die Schrittweite (X) der Brennfleckverschiebung auf dem Target (2) derart bemessen ist, daß die dadurch erzeugte Röntgenstrahlverschiebung (Y) auf dem Detektor (6) kleiner als die Flächenabmessung (L) eines Detektorelementes (13) ist.

2. Einrichtung nach Anspruch 1,
**dadurch gekennzeichnet**
daß die Schrittweite (X) einer Verschiebung um eine halbe Flächenabmessun9 (L) eines Detektorelementes (13) entspricht.

3. Einrichtung nach einem der Ansprüche 1 oder 2,
**dadurch gekennzeichnet,**
daß der Detektor (6) in seiner Stellung der veränderten Röntgenstrahlrichtung entsprechend nachfahrbar angeordnet ist.

4. Einrichtung nach einem der vorhergehenden Ansprüche,
**dadurch gekennzeichnet,**
daß das Target (23) eine dem gewünschten Abstand zwischen Brennfleck (4) und Drehachse (17) für die aufeinanderfolgenden Röntgenbilder entsprechend ausgeformte Targetoberfläche aufweist.

5. Einrichtung nach Anspruch 4,
**dadurch gekennzeichnet**,
daß das Target (23) als hohlkegelartig geformte Schale ausgebildet ist.

6. Einrichtung nach einem der vorhergehenden Ansprüche,
**dadurch gekennzeichnet**,
daß das Target (2) aus zumindest zwei verschiedenen, benachbart angeordneten Metallen (9, 10, 11) besteht.

7. Einrichtung nach Anspruch 6,
**dadurch gekennzeichnet,**
daß der Elektronenstrahl (3) auf die verschiedenen Metalle (9, 10, 11) des Targets (2) ausrichtbar ist.

8. Einrichtung nach einem der vorhergehenden Ansprüche,
**dadurch gekennzeichnet,**
daß auf das Target (2) der Elektronenstrahl (3) eines Elektronenmikroskops ausgerichtet wird.

9. Einrichtung nach einem der vorhergehenden Ansprüche,
**dadurch gekennzeichnet**,
daß zwischen Objekt (1) und Detektor (6) eine auf konstantem elektrischen Potential gehaltene elektrisch leitfähige Folie (7) eingesetzt ist.

## Claims

1. Device for X-ray irradiation of body layers having an X-ray beam source to produce an X-ray beam which is aimed at an object, which is to be examined, in order to pass through it, and having a detector (6) which measures the reduction in intensity of the X-ray beam after passing through the object and is arranged behind the object, seen in the direction in which the X-ray beam passes through, a target (2) being used as the X-ray beam source, which target (2) is connected as an anode and is arranged in the beam path of an electron beam which is emitted cathodically and strikes the target at the focus point, characterized in that the detector is constructed from detector elements, and in that a step by step shift in the focus point is provided by adjustment of the electron beam (3) in order to displace the focus point (4) on the target (2), the step width (X) of the shift in the focus point on the target (2) being dimensioned in such a manner that the shift (Y) in the X-ray beam produced thereby on the detector (6) is smaller than the surface dimension (L) of a detector element (13).

2. Device according to Claim 1, characterized in that the step width (X) corresponds to a shift by half the surface dimension (L) of a detector element (13).

3. Device according to one of Claims 1 or 2, characterized in that the position of the detector (6) is arranged such that it can follow up the changed X-ray beam direction.

4. Device according to one of the preceding claims, characterized in that the target (23) has a target surface which is formed to correspond to the desired distance between the focus point (4) and the rotation axis (17) for the subsequent X-ray radiographs.

5. Device according to Claim 4, characterized in that the target (23) is designed as a shell which is formed like a hollow cone.

6. Device according to one of the preceding claims, characterized in that the target (2) is composed of at least two different metals (9, 10, 11), which are arranged adjacent.

7. Device according to Claim 6, characterized in that the electron beam (3) can be directed at the different metals (9, 10, 11) of the target (2).

8. Device according to one of the preceding claims, characterized in that the electron beam (3) of an electron microscope is directed at the target (2).

9. Device according to one of the preceding claims, characterized in that an electrically conductive foil (7), which is kept at a constant electrical potential, is inserted between the object (1) and the detector (6).

## Revendications

1. Dispositif d'exposition aux rayons X de coupes corporelles, comprenant une source de rayons X destinée à produire un faisceau de rayons X, lequel est dirigé sur un objet à examiner, pour le traverser, et un détecteur (6), qui mesure la diminution de l'intensité du faisceau de rayons X après que ce dernier a traversé l'objet, détecteur qui est disposé, quand on regarde dans la direction du faisceau de rayons X, en arrière de l'objet, une cible (2), montée en anode, servant de source de rayons X, cette cible étant disposée sur la trajectoire d'un faisceau électronique à émission cathodique qui tombe sur la cible au niveau du foyer, caractérisé en ce que le détecteur est constitué d'éléments de détection, et que, pour décaler le foyer (4) sur la cible (2) par déplacement du faisceau électronique (3), il est prévu un déplacement pas à pas du foyer, le pas de progression (X) du déplacement du foyer sur la cible (2) étant déterminé de façon que le déplacement (Y) ainsi obtenu du faisceau de rayons X soit, sur le détecteur (6), inférieur à la dimension (L) d'un élément de détection (13).

2. Dispositif selon la revendication 1, caractérisé en ce que le pas de progression (X) d'un déplacement correspond à la moitié de la dimension (L) d'un élément de détection (13).

3. Dispositif selon l'une des revendications 1 ou 2, caractérisé en ce que le détecteur (6) est disposé dans une position pouvant suivre la direction du faisceau de rayons X au fur et à mesure de sa modification.

4. Dispositif selon l'une des revendications précédentes, caractérisé en ce que la cible (23) comporte une surface de cible dont la forme est adaptée à la distance souhaitée entre le foyer (4) et l'axe de rotation (17) pour les radiographies successives.

5. Dispositif selon la revendication 4, caractérisé en ce que la cible (23) est constituée d'une coquille en forme de cône creux.

6. Dispositif selon l'une des revendications précédentes, caractérisé en ce que la cible (2) est constituée d'au moins deux métaux (9, 10, 11) différents, disposés l'un à côté de l'autre.

7. Dispositif selon la revendication 6, caractérisé en ce que le faisceau électronique (3) peut être dirigé sur les différents métaux (9, 10, 11) de la cible (2).

8. Dispositif selon l'une des revendications précédentes, caractérisé en ce que le faisceau électronique (3) d'un microscope électronique est envoyé sur la cible (2).

9. Dispositif selon l'une des revendications précédentes, caractérisé en ce qu'entre l'objet (1) et le détecteur (6) est insérée une feuille (7) conductrice de l'électricité, maintenue à un potentiel électrique constant.
